Europäisches Patentamt

European Patent Office

Office européen des brevets

(11) Veröffentlichungsnummer: **0 468 273 A2**

## (12) EUROPÄISCHE PATENTANMELDUNG

(21) Anmeldenummer: **91111392.6**

(22) Anmeldetag: **09.07.91**

(51) Int. Cl.⁵: **B62D 55/24**

(30) Priorität: **17.07.90 DE 4022682**

(43) Veröffentlichungstag der Anmeldung:
**29.01.92 Patentblatt 92/05**

(84) Benannte Vertragsstaaten:
**DE FR GB IT SE**

(71) Anmelder: **Continental Aktiengesellschaft**
**Königsworther Platz 1, Postfach 1 69**
**W-3000 Hannover 1(DE)**

Anmelder: **Intertractor Viehmann GmbH. & Co**
**Hagenerstrasse 325**
**W-5820 Gevelsberg(DE)**

(72) Erfinder: **Bräutigam, Jürgen**
**Wittekamp 29**
**W-3000 Hannover 1(DE)**
Erfinder: **Laus, Heinz**
**Leonhardstrasse 36**
**W-4350 Recklinghausen(DE)**

(74) Vertreter: **Schneider, Egon**
**c/o CONTINENTAL Aktiengesellschaft**
**Königsworther Platz 1 Postfach 169**
**W-3000 Hannover 1(DE)**

(54) Flexibles, endloses Raupenband für Raupenfahrzeuge.

(57) Ein flexibles, endloses Raupenband für Raupenfahrzeuge weist eine äußere und eine innere Deckschicht aus elastomerem Werkstoff auf, die unter Einbettung eines längsverlaufenden Zugfestigkeitsträgers miteinander verbunden sind. Die bodenangreifende Lauffläche des Raupenbandes ist mit einer Profilierung versehen, während die Innenfläche zur Auflage auf zylindrische Rollenoberflächen eines Laufwerkes eben ausgebildet ist. Um ein derartiges Raupenband formschlüssig antreiben zu können und einen vibrations- und geräuscharmen Lauf zu erzielen, sind in die innere Deckschicht (13) sich über die Bandbreite erstreckende, bündig mit der Innenfläche (27) abschließende, biegesteife Querstäbe (29) eingelassen. Die innere Deckschicht (13) weist vor und hinter den Querstäben (29) längsverlaufende Ausnehmungen (31) auf.

FIG. 2

EP 0 468 273 A2

Die Erfindung betrifft ein flexibles, endloses Raupenband für Raupenfahrzeuge, z.B. Ackerschlepper, Transportfahrzeuge oder Erdbewegungsfahrzeuge, mit einer äußeren und einer inneren Deckschicht aus elastomerem Werkstoff, die unter Einbettung eines längsverlaufenden Zugfestigkeitsträgers miteinander verbunden sind, und mit einer Profilierung der bodenangreifenden Lauffläche und einer ebenen Innenfläche des Raupenbandes zur Auflage auf zylindrische Rollenoberflächen eines Laufwerkes des Raupenfahrzeuges.

Es ist bekannt (EP 0 165 245 B1), Raupenfahrzeuge mit einem Laufwerk auszurüsten, das eine Antriebsrolle, Umlenkrollen und Führungsrollen aufweist, um die ein flexibles, endloses Raupenband geschlungen ist. Das Raupenband wird reibschlüssig angetrieben. Bei der Anwesenheit von reibungsverminderndem Material, wie beispielsweise feuchtem Lehmboden, ist der Reibschluß zwischen der Antriebsrolle und dem Raupenband nicht mehr gewährleistet, so daß das Raupenfahrzeug funktionsuntüchtig werden kann.

Um auch auf reibungsvermindernden Böden einen funktionstüchtigen Antrieb eines Raupenfahrzeuges zu erreichen, ist es bekannt, endlose Raupenketten, die formschlüssig angetrieben werden, einzusetzen. Diese formschlüssig angetriebenen Raupenketten haben aber den Nachteil, daß auf festen Böden keine höheren Geschwindigkeiten erzielbar sind, da die Umlenkung der Kette über ein Polygon erfolgt und erhebliche Vibrationen im Laufwerk die Folge sind.

Wird ein landwirtschaftliches Fahrzeug in der Weise umgerüstet, daß anstelle des bisher vorhandenen bereiften Antriebsrades ein für ein Raupenband geeignetes Laufwerk eingesetzt wird, so wird das Laufwerk etwa ein Dreieck bilden, dessen obere Spitze durch die Antriebsrolle und dessen andere Spitzen durch Umlenkrollen gebildet sind, wobei die Umlenkrollen die Aufstandsebene des Laufwerkes bilden. Dabei ist lediglich erforderlich, das bisherige bereifte Antriebsrad (Felge und Reifen) von dem Fahrwerk zu lösen und anstelle dessen das Laufwerk auf die Antriebsachse mit der Antriebsrolle aufzustecken und zu fixieren. Das Fahrzeug kann damit sehr schnell auf entsprechende Fahrwerke umgerüstet werden, sofern die entsprechende Bodenart dies erforderlich macht. Da die Umrüstung an einer vorgesehenen Montagestelle vorgenommen werden muß, sind mit dem Fahrzeug auch Wegstrecken zwischen Einsatzstelle und Montagestelle zurückzulegen, die einen festen Boden aufweisen und höhere Geschwindigkeiten erlauben würden.

Ein um ein dreieckförmiges Laufwerk geführtes Raupenband umschlingt die Antriebsrolle in einem kleineren Winkel als bei Laufwerken mit einer parallelen Raupenbandführung. Der Reibschluß ist aufgrund der kleineren Umschlingung wesentlich verringert. Tritt nun noch das Problem von reibungsvermindernden Böden auf, so kann mit einem derartig ausgestatteten Raupenfahrzeug nicht erfolgreich gearbeitet werden.

Es wäre daher vorteilhaft, daß das Raupenband formschlüssig angetrieben wird und dabei den vorteilhaften Rundlauf des reibschlüssigen Antriebes behält, der zu einem vibrationsarmen Lauf des Laufwerkes auch bei höheren Geschwindigkeiten führt.

Der Erfindung liegt die Aufgabe zugrunde, ein Raupenband der eingangs beschriebenen Art zu schaffen, das formschlüssig angetrieben werden kann und im Betrieb einen vibrations- und geräuscharmen Lauf des Laufwerkes ermöglicht.

Die Aufgabe wird erfindungsgemäß dadurch gelöst, daß in die innere Deckschicht sich über die Bandbreite erstreckende, bündig mit der Innenfläche abschließende, biegesteife Querstäbe eingelassen sind, und daß die innere Deckschicht vor und hinter den Querstäben längsverlaufende Ausnehmungen aufweist.

Das Raupenband weist eine ebene Innenfläche auf, die durch keine Vorsprünge bzw. Erhebungen unterbrochen ist, so daß die Oberfläche der Antriebsrolle mit voller Auflage mit Ausnahme der längsverlaufenden Ausnehmungen umschlungen werden kann. Die in die innere Deckschicht eingelassenen Querstäbe ergeben eine Angriffsmöglichkeit für eine formschlüssige Antriebseinheit, z.B. ein Zahnrad auf der Antriebsrolle. Die Ausnehmungen vor und hinter den Querstäben ermöglichen das ausreichend tiefe Anlegen der Antriebszapfen, so daß die Flanken der Antriebszapfen mit den Querstäben den Formschluß ergeben. Die biegesteifen Querstäbe ermöglichen eine über die gesamte Bandbreite gleichmäßige Krafteinleitung.

Die sich mit der Antriebsrolle drehenden Antriebszapfen greifen in die Querstäbe ein und sichern einen permanent formschlüssigen Antrieb. Der vorteilhafte Rundlauf des Raupenbandes bleibt weiterhin gewährleistet, da das auf der Antriebsrolle aufliegende Raupenband aufgrund des Reibschlusses ebenfalls mitgenommen wird.

Die elastische Dehnung des Raupenbandes ermöglicht es, daß die Kraftübertragung über mehrere Zähne gleichzeitig erfolgt. Bei den ebenfalls formschlüssig angetriebenen Raupenketten trägt dagegen jeweils nur ein Antriebszapfen.

In vorteilhafter Ausgestaltung der Erfindung besteht der Zugfestigkeitsträger aus parallel verlaufenden Stahlseilen und ist im Bereich der längsverlaufenden Ausnehmungen seilfrei ausgebildet.

Stahlseile haben sich als eingebettete Zugfestigkeitsträger für auf Zug belastete elastomere Gurte bewährt. Die seilfreien Zonen ermöglichen das Anordnen der Ausnehmungen für den Eingriff der Antriebszapfen an den Querstäben.

In weiterer vorteilhafter Ausgestaltung besteht der Zugfestigkeitsträger aus einer oder mehrerer Kunststoffgewebelagen. Die Kunststoffgewebelagen weisen eine geringe Betriebsdehnung auf, was zu vorteilhaften kleinen Spannwegen führt. Die hohe Zerreißdehnung der Kunststoffgewebelagen erlaubt eine kurzzeitige Überbeanspruchung, z.B. durch punktförmige Belastung, ohne daß das Raupenband zerstört wird.

In weiterer vorteilhafter Ausgestaltung der Erfindung sind die Stahlseile von einer hochfesten Kunststoffquercordlage abgedeckt. Zwischen den Querstäben wird dadurch eine hilfreiche Querversteifung und mechanische Sicherung des Raupenbandes erzielt. Diese Quercordlage kann vorzugsweise aus Polyamid bestehen.

In vorteilhafter Ausgestaltung der Erfindung sind die Ausnehmungen in Form einer durch laufenden Längsnut ausgebildet. Die mit der Antriebsrolle umlaufenden Antriebszapfen, vorzugsweise die Zähne eines Antriebszahnrades, tauchen vor den Querstäben bereits in die Längsnut ein, so daß sie mit ihrer vollen Flanke gegen die Seitenfläche des Querstabes anliegen können. Dieser freie Raum für die Zahnungsspitzen verhindert eine Walkung des elastomeren Werkstoffes des Raupenbandes.

Werden die Ausnehmungen gemäß Anspruch 7 in Form von das Raupenband durchdringenden Öffnungen ausgebildet, so dienen sie gleichzeitig als Schmutzlöcher, durch die beispielsweise feuchter Lehm entweichen kann.

Weitere vorteilhafte Ausgestaltungen der Erfindung werden in den Unteransprüchen 8 bis 11 gekennzeichnet.

Durch die Erfindung wird ein flexibles, endloses Raupenband geschaffen, das sich für den Einsatz eines kombinierten form- und reibschlüssigen Antriebs eignet. Das Raupenband ermöglicht aufgrund seiner Längsflexibilität einen gleichmäßigen Antrieb. Es ist nun auch möglich, auf feuchten Untergrund Raupenfahrzeuge einzusetzen, die nicht mit Raupenketten ausgestattet sein müssen.

Anhand der Zeichnung werden nachstehend zwei Ausführungsbeispiele der Erfindung näher erläutert. Es zeigt

Fig. 1 ein Raupenband im Querschnitt mit einem Zugfestigkeitsträger aus Stahlseilen,

Fig. 2 eine Draufsicht auf die Innenfläche des Raupenbandes gemäß Fig. 1,

Fig. 3 einen Längsschnitt durch ein Raupenband nach einer modifizierten Ausführungsform,

Fig. 4 die Draufsicht auf die bodenangreifende Lauffläche des Raupenbandes gemäß Fig. 3,

Fig. 5 einen Querschnitt durch das Raupenband gemäß Fig. 3 und 4,

Fig. 6 in schematischer Darstellung ein endlos geschlossenes Raupenband auf einem ein Dreieck bildenden Laufwerk mit in der inneren Deckschicht angeordneten Querstäben.

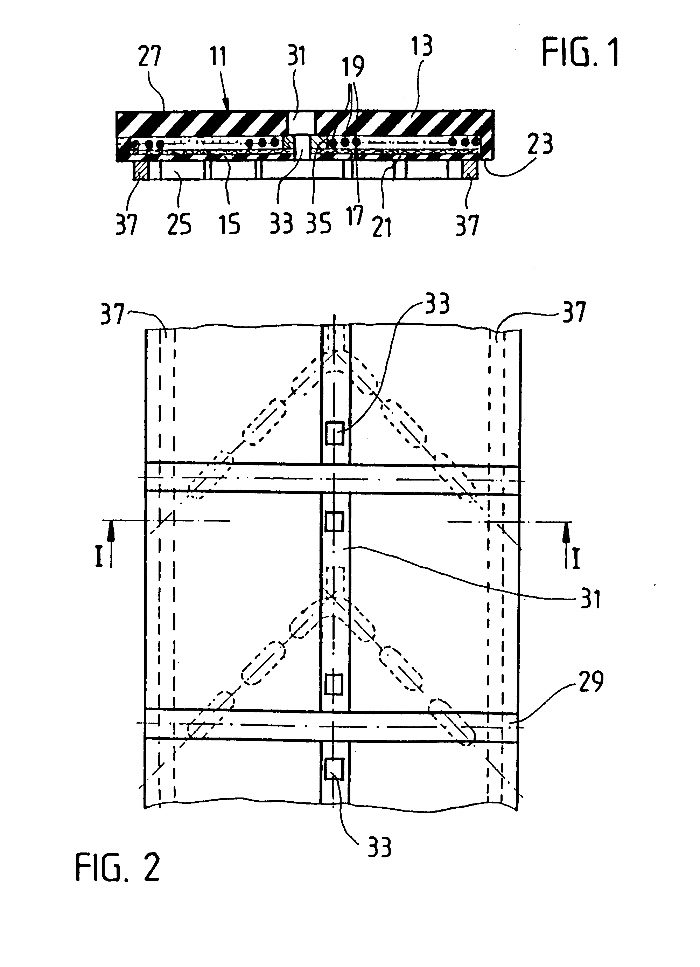

Das in den Fig. 1 und 2 gezeigte Raupenband 11 weist eine innere Deckschicht 13 und eine äußere Deckschicht 15 auf. Die Deckschichten 13 und 15 bestehen aus elastomerem Werkstoff, z.B. aus einer verschleißfesten Gummimischung. In die beiden Deckschichten 13 und 15 ist ein Zugfestigkeitsträger 17 aus parallel nebeneinander angeordneten Stahlseilen 19 eingebettet. Die Stahlseile 19 sind von einer ebenfalls in die Deckschichten 13 und 15 eingebetten Polyamidquercordlage 21 abgedeckt. Die Polyamidquercordlage 21 liegt zur äußeren Deckschicht 15 gewandt, die dünner ausgebildet ist als die innere Deckschicht 13 und die bodenangreifende Lauffläche 23 bildet. Auf dieser bodenangreifenden Lauffläche 23 sind sich erhebende, V-förmige Stollen 25 aus elastomerem Werkstoff anvulkanisiert.

In die innere Deckschicht 13 sind bündig mit der Innenfläche 27 abschließende Querstäbe 29 in regelmäßigen Abständen eingelassen. Diese Querstäbe 29 erstrecken sich über die gesamte Breite des Raupenbandes 11 (Fig. 2). Die innere Deckschicht 13 ist zwischen den Querstäben 29 mit einer in der Längsmitte durchlaufenden Längsnut 31 versehen. Kurz vor und hinter den Querstäben 29 sind in der Längsnut 31 jeweils den übrigen Bandkörper des Raupenbandes 11 durchdringende rechteckige Öffnungen 33 vorhanden. Im Bereich der durchlaufenden Längsnut 31 weist das Raupenband 11 eine seilfreie Zone 35 auf.

Die bodenangreifende Lauffläche 23 ist mit seitlichen, längsverlaufenden Randleisten 37 aus elastomerem Werkstoff versehen, die mindestens die Höhe der Stollen 25 haben. Auf feuchten Böden wird dadurch eine Fahrstabilisierung erreicht.

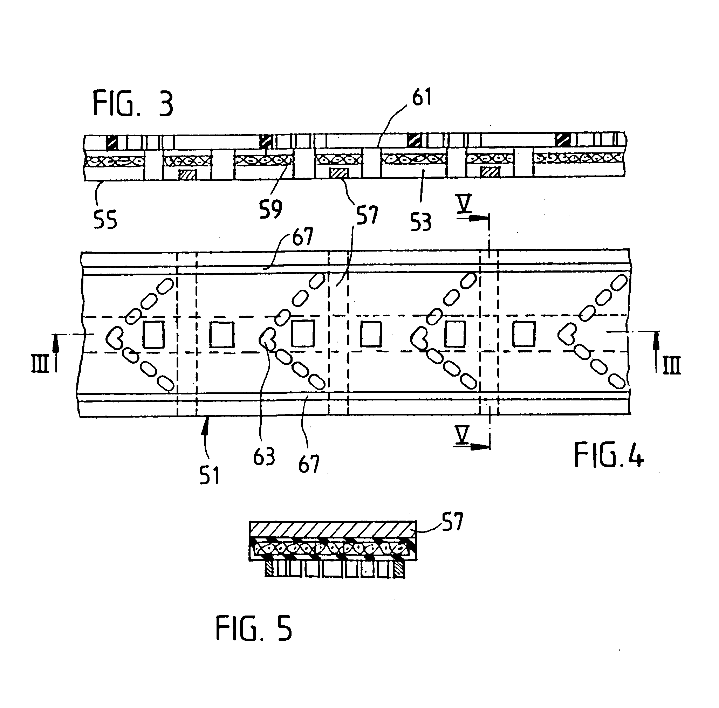

Die in den Fig. 3 bis 5 gezeigte modifizierte Ausführung eines Raupenbandes 51 weist ebenfalls in die innere Deckschicht 53 bündig mit der Innenfläche 55 in regelmäßigen Abständen eingelassene biegesteife Querstäbe 57 auf. Die Querstäbe 57 sind als Stahlflachstäbe ausgebildet und in die innere Deckschicht 53 einvulkanisiert. Der Zugfestigkeitsträger 59 besteht aus vier übereinander angeordneten Polyester-Gewebelagen. Die in der Fig. 4 gezeigte bodenangreifende Lauffläche 61 weist ebenfalls V-förmig angeordnete Gummistollen 63 und parallel zu den Bandrändern verlaufende Gummirandleisten 67 auf. Der übrige Aufbau des Raupenbandes 51 entspricht dem in den Fig. 1 und 2 geschilderten Raupenband 11.

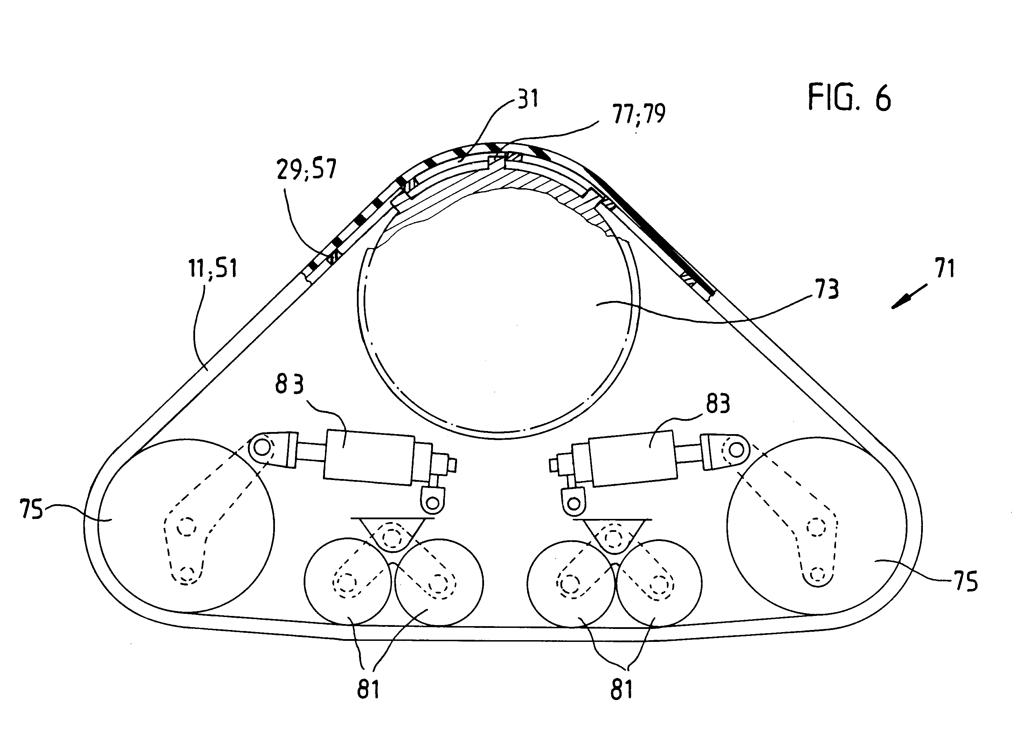

In der Fig. 6 wird schematisch dargestellt, wie die vorstehend beschriebenen Raupenbänder 11 bzw. 51 nach ihrem Endlosschließen auf einem ein Dreieck bildenden Laufwerk 71 angeordnet sind. Die Antriebsachse des Laufwerkes 71 ist mit einer Antriebsrolle 73 drehfest verbunden. Zu dem Laufwerk 71 gehören zwei Umlenkrollen 75, die die beiden unteren Spitzen des Dreieckes bilden, wobei sie in der Aufstandsebene des Laufwerkes 71 angeordnet sind.

Die Antriebsrolle 73 weist eine Zahnung 77 auf, deren Zähne 79 über die Flucht der Auflagefläche für das Raupenband 11; 51 hinausragen. Der Teilkreis der Zahnung 77 liegt bündig in der Auflageebene des Raupenbandes 11; 51 auf der Antriebsrolle 73. Diese Zahnung 77 ist in einer hier nicht sichtbaren mittigen Ausnehmung der Umfangsfläche der Antriebsrolle 73 angeordnet. Die Zahnteilung der Zahnung 77 entspricht den Abständen der Querstäbe 29; 57.

Zwischen den beiden Umlenkrollen 75 sind Stützräder 81 vorgesehen. Das Laufwerk 71 weist die Umlenkrollen 75 angreifende Bandspannvorrichtungen 83 auf.

Das Laufwerk 71 kann mit seiner Antriebsrolle 73 auf die Antriebsachse eines Fahrwerkes aufgesteckt und an dieser befestigt werden, so daß das Laufwerk 71 anstelle eines üblichen bereiften Rades eingesetzt werden kann.

Das Raupenband 11 bzw. 51 umschlingt die zylindrische Antriebsrolle 73, die in der Mitte mit der Zahnung 77 versehen ist, die über die Rollenoberfläche hinaus- und in die mittige Längsnut 31 des Raupenbandes 11; 51 ragt. Auf dem Raupenband 11; 51 können an den Querstäben 29; 57 angeschraubte, hier nicht sichtbare, die Zähne 79 der Zahnung 77 mit Spiel umfassende Führungsansätze zur Längsführung des Raupenbandes 11; 51 angeordnet sein. Das Raupenband 11 bzw. 51 ist weiter um die beiden Umlenkrollen 75 geschlungen und wird über zwischen den Umlenkrollen 75 angeordnete Stützräder 81 geführt.

Im Umschlingungsbereich der Antriebsrolle 73 sind während des Betriebes immer zwei bis drei Zahnspitzen an den Querstäben 29; 57 in Eingriff und sichern den formschlüssigen Antrieb. Wird das Aneinandergreifen von Zahn und Querstab durch Lauferschütterungen oder Toleranzen im Betrieb kurzzeitig aufgehoben, so wird die Kraftübertragung über den zusätzlich wirkenden Reibschluß sichergestellt. Die Kraftübertragung wird durch das längsflexible Raupenband 11; 51 vergleichmäßigt. Dieser vergleichmäßigte Lauf verringert Vibrationen und Geräuschentwicklung und erlaubt es dem Benutzer des Raupenfahrzeuges, auf festen Böden eine höhere Geschwindigkeit zu fahren, als es bei Raupenfahrzeugen mit Antriebsketten möglich ist.

**Patentansprüche**

1. Flexibles, endloses Raupenband für Raupenfahrzeuge, z.B. Ackerschlepper oder Erdbewegungsfahrzeuge, mit einer äußeren und einer inneren Deckschicht aus elastomerem Werkstoff, die unter Einbettung eines längsverlaufenden Zugfestigkeitsträgers miteinander verbunden sind, und mit einer Profilierung der bodenangreifenden Lauffläche und einer ebenen Innenfläche des Raupenbandes zur Auflage auf zylindrischen Rollenoberflächen eines Laufwerkes des Raupenfahrzeuges, **dadurch gekennzeichnet**, daß in die innere Deckschicht (13; 53) sich über die Bandbreite erstreckende, bündig mit der Innenfläche (27; 55) abschließende, biegesteife Querstäbe (29; 57) eingelassen sind, daß die innere Deckschicht (13; 53) vor und hinter den Querstäben (29; 57) längsverlaufende Ausnehmungen (31) aufweist.

2. Raupenband nach Anspruch 1, dadurch gekennzeichnet, daß der Zugfestigkeitsträger (17) aus parallel verlaufenden Stahlseilen (19) besteht und im Bereich der längsverlaufenden Ausnehmungen (31) seilfrei ausgebildet ist.

3. Raupenband nach Anspruch 1, dadurch gekennzeichnet, daß der Zugfestigkeitsträger (59) aus einer oder mehreren Kunststoffgewebelagen besteht.

4. Raupenband nach Anspruch 2, dadurch gekennzeichnet, daß die Stahlseile (19) von einer hochfesten Kunststoffquercordlage (21) abgedeckt sind.

5. Raupenband nach Anspruch 4, dadurch gekennzeichnet, daß die hochfeste Kunststoffquercordlage (21) aus Polyamid besteht.

6. Raupenband nach einem der Ansprüche 1 bis 5, dadurch gekennzeichnet, daß die Ausnehmungen (31) in Form einer durchlaufenden Längsnut ausgebildet sind.

7. Raupenband nach einem der Ansprüche 1 bis 6, dadurch gekennzeichnet, daß die Ausnehmungen (31) in Form von das Raupenband (11; 51) durchdringenden Öffnungen ausgebildet sind.

8. Raupenband nach Anspruch 6, dadurch gekennzeichnet, daß in der Längsnut (31) vor und hinter den Querstäben (29; 57) den übrigen Bandkörper durchdringende Öffnungen (33) ausgebildet sind.

9. Raupenband nach einem der Ansprüche 1 bis 8, dadurch gekennzeichnet, daß die Profilierung der bodenangreifenden Lauffläche (23) durch sich erhebende, V-förmig angeordnete Stollen (25) ausgebildet ist.

10. Raupenband nach einem der Ansprüche 1 bis 9, dadurch gekennzeichnet, daß die bodenangreifende Lauffläche (23) beidseitig angebrachte Randleisten (37) aufweist.

11. Raupenband nach einem der Ansprüche 1 bis 10, dadurch gekennzeichnet, daß die Querstäbe Stahlflachstäbe (29; 57) sind, deren an der Innenfläche (27; 55) liegenden Kanten abgerundet sind.

FIG. 1

FIG. 2

FIG. 3

FIG.4

FIG. 5

FIG. 6